# EUROPÄISCHE PATENTSCHRIFT

(11) **EP 0 642 738 B1**
(45) Veröffentlichungstag und Bekanntmachung des Hinweises auf die Patenterteilung: **07.04.1999**
(21) Anmeldenummer: 94110705.4
(22) Anmeldetag: 09.07.1994
(51) Int. Cl.: A22C 17/04, B30B 9/24

(54) **Pressband-Separiereinrichtung**
Pressure belt-separating apparatus
Appareil séparateur à bande presseuse

(30) Priorität: 09.09.1993 DE 9313610 U
(43) Veröffentlichungstag der Anmeldung: 15.03.1995
(73) Patentinhaber: NORDISCHER MASCHINENBAU RUD. BAADER GMBH + CO KG, 23560 Lübeck (DE)
(72) Erfinder: Kunig, Helmut, D-23611 Bad Schwartau (DE); Räther, Siegfried, D-23795 Segeberg (DE)
(74) Vertreter: Schaller, Hans-Jörg

(56) Entgegenhaltungen:
- DE-A- 3 516 623
- GB-A- 1 457 000
- GB-A- 2 165 200
- US-A- 3 734 000

## Beschreibung

Die Erfindung geht aus von einer Einrichtung zum Trennen von miteinander vermischten Stoffen unterschiedlicher Fließfähigkeit, insbesondere zum Zwecke des Aufbereitens von Lebensmitteln, mit einer umlaufend angetriebenen Hohltrommel mit perforierter Mantelfläche, einem von außen an diese unter Umschlingung eines Teils des Umfanges der Hohltrommel anpreßbaren endlosen Preßband, sowie Mitteln zum Abstreifen des Preßgutes an der inneren und äußeren Mantelfläche der Hohltrommel.

Eine solche Einrichtung ist beispielsweise aus der DE-A 20 32 774 zu entnehmen, die den grundsätzlichen Aufbau derartiger Maschinen wiedergibt. Die Arbeitsweise ist dabei so, daß das Preßgut zwischen Preßband und perforierte Mantelfläche der Hohltrommel gegeben und dort einem quasi hydraulischen Druck unterworfen wird. Dieser Druck bewirkt, daß die leichter fließenden Bestandteile des Preßgutes durch die Perforationen in die Hohltrommel abfließen, während die übrigen Bestandteile auf der Mantelfläche der Hohltrommel zurückbleiben und dort abgestreift werden.

Mit derartigen, kurz Separator genannten, Einrichtungen lassen sich die verschiedenartigsten Stoffe einem Separierprozeß unterwerfen, durch den eine Trennung von Bestandteilen unterschiedlicher Fließfähigkeit erfolgt. So lassen sich beispielsweise trennen: Fischfleisch von Gräten und Haut, die verschiedensten Fleischsorten von Knochen, Sehnen, Flechten und Häuten; Schalenobst von Schale, Kernen, Stielen usw.; Butter oder Käse von Verpackungsmaterial, z. B. zum Entpacken von Fehlpackungen, und vieles mehr.

Bei diesem Prozeß kommt dem sicheren Austrag der separierten Stoffe eine hohe Bedeutung Zu, da dieser Vorgang auf die Effektivität des Prozesses wie auch auf die Qualität des Produktes wesentlichen Einfluß hat. Das betrifft sowohl den Austrag des Nutzproduktes aus dem Inneren der Hohltrommel als auch das Entfernen der an der äußeren Mantelfläche verbleibenden Bestandteile des Preßgutes, wobei die technische Problematik des letzteren Vorganges eine besonders umfassende ist. Diese beruht u. a. darauf, daß aufgrund der je nach Anwendungsfall auf das System einwirkenden sehr hohen Kräfte elastische Verformungen in dem System auftreten, die sich auf die Rundlaufgenauigkeit der Hohltrommel und/oder auf deren Achsausrichtung auswirkt. Unter diesen Bedingungen muß aber die Funktion der Abstreifmittel gewährleistet sein.

Nach dem US-Patent Nr. 3 734 000 wird zu diesem Zweck eine Abstreifklinge vorgesehen, die mit ihrer Schneide gegen die Laufrichtung der Hohltrommel ausgerichtet und gegen deren Mantelfläche angedrückt gehalten wird. Der Andruck erfolgt dabei unter Parallelführung oder Parallelverschwenkung.

Mit dieser bekannten Anordnung und Vorgehensweise sind entscheidende Nachteile verbunden: So wird der einzustellende Andruck der Abstreifklinge durch die dargelegten bautechnischen Gegebenheiten anstatt durch die einen niedrigeren Andruck erfordernden produkspezifischen Erfordernisse bestimmt, was zur Folge hat, daß die Hohltrommel und die Abstreifklinge einem unnötig hohen Verschleiß unterworfen sind.

Man hat versucht, dem durch geeignete Werkstoffpaarung zu begegnen, wobei man die Werkstoffauswahl so getroffen hat, daß die kostengünstigere Abstreifklinge als Hauptverschleißteil fungiert. Dies kann aber nicht befriedigen, da damit der auftretende Abrieb unvermeidbar in das Produkt gelangt, was aus gesundheitlichen Gründen problematisch ist.

Weitere Nachteile dieses Konzeptes sind das hohe Bremsmoment, welches die Energiebilanz negativ beeinflußt, sowie die Notwendigkeit relativ kurzer Wartungsintervalle.

Der Erfindung liegt daher die Aufgabe zugrunde, diese Nachteile des dargelegten Standes der Technik zu beheben.

Diese Aufgabe wird bei einer Einrichtung der eingangs beschriebenen Art dadurch gelöst, daß mindestens das Mittel zum Abstreifen an der äußeren Mantelfläche eine Abstreifklinge aufweist, die von mindestens einem Stützelement gestützt wird und und die in Bezug auf die Hohltrommel in im wesentlichen radialer Richtung schwimmend angeordnet ist, wobei das Stützelement eine Verschiebbarkeit der Abstreifklinge in ihrer Längserstreckung in im wesentlichen axialer Richtung in Bezug auf die Hohltrommel erlaubt und die Abstreifklinge punktförmig abstützt und wobei die Abstreifklinge mittels in der Ebene derselben wirkender Kraftmittel an die äußere Mantelfläche (3) der Hohltrommel angedrückt wird.

Die damit erzielbaren Vorteile bestehen insbesondere darin, daß die Andrückkraft der Abstreifklinge an die Mantelfläche der Hohltrommel dank der so erreichbaren Anpassung und Kraftverteilung wesentlich reduziert werden kann, womit sich alle erwähnten Parameter entsprechend verbessern.

Die Ausbildung der Abstreifklinge als in Richtung ihrer Längserstreckung verschiebbar ermöglicht einen einfachen Ausbau bzw. Einbau der Abstreifklinge von der Seite her.

Weitere vorteilhafte Ausführungsmerkmale der Erfindung sind den Unteransprüchen entnehmbar.

Die Erfindung ist nachstehend anhand eines in der Zeichnung dargestellten Ausführungsbeispiels näher erläutert. Es zeigen:
- Fig. 1: eine Seitenansicht eines Preßband/Hohltrommel-Weichseparators in vereinfachter Darstellung,
- Fig. 2: eine vergrößerte Ausschnitt-Stirnansicht im Bereich der äußeren Abstreifmittel,

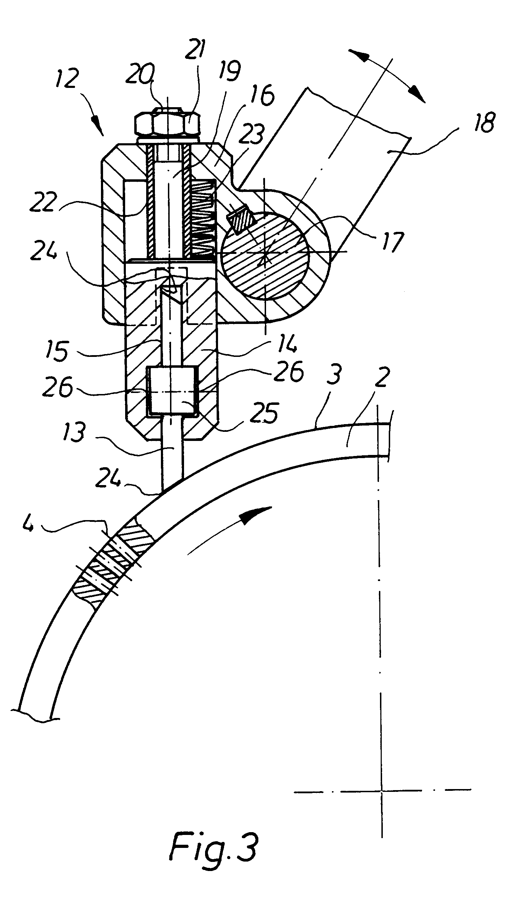

- Fig. 3: einen Querschnitt durch die Abstreifmittel nach Fig. 2 längs der Schnittlinie II-II.

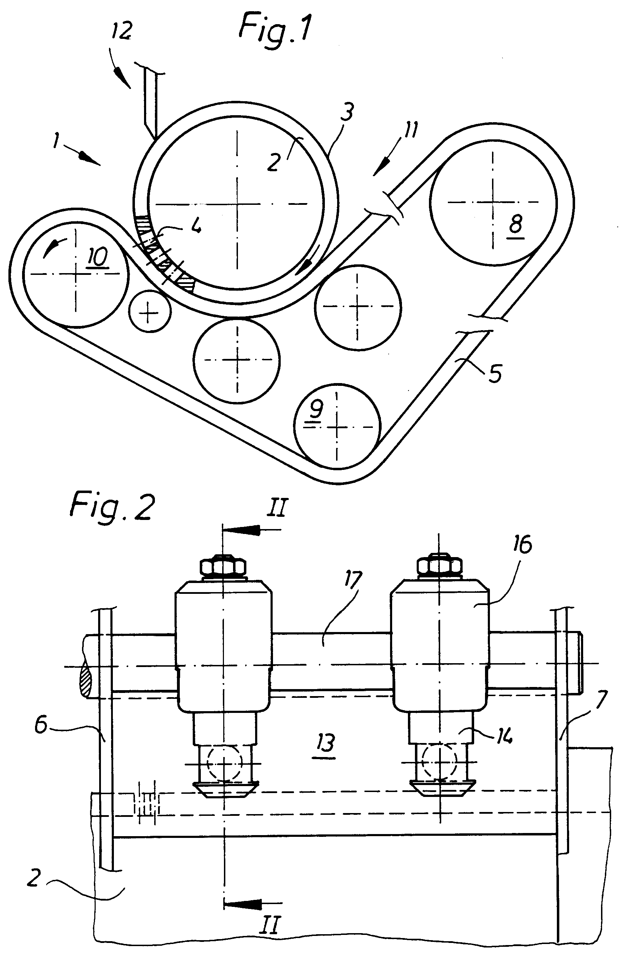

In einem nicht näher dargestellten Gestell eines Weichseparators 1 ist gemäß Fig. 1 eine auf geeignete Weise im Uhrzeigersinn umlaufend angetriebene Hohltrommel 2 gelagert, die eine mit Perforationen 4 durchsetzte Mantelfläche 3 aufweist. Die Hohltrommel 2 ist entsprechend Fig. 1 auf einem Teil ihres Umfanges von einem endlosen Preßband 5 umschlungen, das aus einem elastischen Werkstoff, wie Gummi oder Polyurethan, besteht und zwischen Seitenwänden 6 und 7 geführt ist, die in Fig. 2 angedeutet sind und von der Hohltrommel 2 durchdrungen werden. Das Preßband 5 ist über Umlenkwalzen 9 und 10 geführt, von denen diejenige 10 als angetriebene Andrückwalze ausgebildet ist, mit deren Hilfe das Preßband 5 gegen die Hohltrommel 2 anpreßbar ist. Die Umlenkwalze 8 ist als Spannwalze ausgeführt und so angeordnet, daß das Preßband 5 mit der Hohltrommel 2 einen Einzugkeil 11 bildet.

Im oberen Bereich der Peripherie der Hohltrommel 2 befindet sich eine Abstreifvorrichtung 12 , die mit der äußeren Mantelfläche 3 der Hohltrommel 2 in Wirkverbindung steht.

Die Abstreifvorrichtung 12 besteht aus einer Abstreifklinge 13 , die in zentralen Schlitzen 15 zweier Stützelemente 14 geführt sind. Diese sind als Plunger ausgebildet und jeweils in einem topfförmigen Gehäuse 16 verschiebbar geführt. Beide Gehäuse 16 sind an einer Schwenkachse 17 drehsicher befestigt, die in den Seitenwänden 6 und 7 gelagert und durch einen mit einem nicht gezeigten Einstellmechanismus verbundenen Schwenkhebel 18 verschwenkbar ist.

Jedes Stützelement 14 ragt mit seinem geschlitzten Ende aus dem entsprechenden Gehäuse heraus und ist an seinem anderen Ende mit einem abgesetzten Schaft 19 versehen, der in der Bodenwandung des Gehäuses 16 und dabei diese durchdringend geführt ist. Der Schaft 19 ist an seinem Ende mit einem Gewindezapfen 20 zur Aufnahme einer Mutter 21 versehen, mit der eine auf dem Schaft 19 befindliche Distanzhülse 22 gehalten ist. Auf der Distanzhülse 22 ist ein Paket Tellerfedern 23 geführt, die den Raum zwischen der Distanzhülse 22 und der Zylinderwandung des Gehäuses 16 ausfüllen und sich zwischen dessen Bodenwandung und der durch die Absetzung des Schaftes 19 gebildeten Stirnfläche des Stützelementes 14 abstützen.

Die Abstreifklinge 13 ist an beiden Langseiten mit einer Schneide 24 versehen und dadurch beidseitig benutzbar. Die Abstreifklinge 13 ist mit zwei diese quer durchsetzenden und beidseitig aus den Klingenflächen herausragenden Zylinderbolzen 25 versehen, die bei montierter Abstreifklinge 13 in Taschen 26 greifen, die in den Schlitzen 15 ausgebildet sind. Die Taschen 26 sind seitlich, d. h. in Längsrichtung der Abstreifklinge offen, so daß deren Montage oder Demontage im entspannten Zustand auf einfache Weise, nämlich durch seitliches Einschieben bzw. Herausziehen möglich ist.

### Bezugszeichenliste

- 1.: Weichseparator
- 2.: Hohltrommel
- 3.: Mantelfläche
- 4.: Perforation
- 5.: Preßband
- 6.: Seitenwand
- 7.: Seitenwand
- 8.: Umlenkwalze
- 9.: Umlenkwalze
- 10.: Umlenkwalze
- 11.: Einzugkeil
- 12.: Abstreifklinge
- 13.: Abstreifklinge
- 14.: Stützelement
- 15.: Schlitz
- 16.: Gehäuse
- 17.: Schwenkachse
- 18.: Schwenkhebel
- 19.: Schaft
- 20.: Gewindezapfen
- 21.: Mutter
- 22.: Distanzhülse
- 23.: Tellerfeder
- 24.: Schneide
- 25.: Zylinderbolzen
- 26.: Tasche

## Patentansprüche

1. Einrichtung zum Trennen von miteinander vermischten Stoffen unterschiedlicher Fließfähigkeit, insbesondere zum Zwecke des Aufbereitens von Lebensmitteln, mit einer umlaufend angetriebenen Hohltrommel (2) mit perforierter Mantelfläche (3) , einem von außen an diese unter Umschlingung eines Teils des Umfanges der Hohltrommel (2) anpreßbaren endlosen Preßband (5), sowie Mitteln zum Abstreifen (12) des Preßgutes an der inneren und äußeren Mantelfläche der Hohltrommel (2), **dadurch gekennzeichnet,** daß mindestens das Mittel zum Abstreifen (12) an der äußeren Mantelfläche (3) eine Abstreifklinge (13) aufweist, die von mindestens einem Stützelement (14) gestützt wird und die in Bezug auf die Hohltrommel in im wesentlichen radialer Richtung schwimmend angeordnet ist, wobei das Stützelement eine Verschiebbarkeit der Abstreifklinge in ihrer Längserstreckung in im wesentlichen axialer Richtung in Bezug auf die Hohltrommel erlaubt und die Abstreifklinge punktförmig abstützt und wobei die Abstreifklinge mittels in der Ebene derselben wirkender Kraftmittel an die äußere Mantelfläche (3) der Hohltrommel angedrückt wird.

2. Einrichtung nach Anspruch 1 , **dadurch gekennzeichnet,** daß die Abstreifklinge (13) parallel zur Umlaufachse der Hohltrommel (2) geführt ist.

3. Einrichtung nach Anspruch 1 oder 2 , **dadurch gekennzeichnet,** daß die Kraftmittel als Federelement (23) ausgebildet sind.

4. Einrichtung nach Anspruch 1 oder 2 **dadurch gekennzeichnet,** daß die Kraftmittel als hydraulisch oder pneumatisch betriebene Kraftgeber ausgebildet sind.

## Claims

1. Equipment for separating intermixed substances of different flowability, especially for the purpose of preparation of foodstuffs, comprising a rotationally driven hollow drum (2) with perforated circumferential surface (3), an endless press belt (5) externally pressable thereagainst whilst looping around a part of the circumference of the hollow drum (2), as well as means (12) for stripping the pressed stock at the inner and outer circumferential surface of the hollow drum (2), characterised in that at least the means (12) for stripping comprises at the outer circumferential surface (3) a stripper blade (13), which is supported by at least one support element (14) and which with respect to the hollow drum is arranged to be floating in substantially radial direction, wherein the support element permits a displaceability of the stripper blade in its longitudinal extent in substantially axial direction with respect to the hollow drum and the stripper blade is supported at points and wherein the stripper blade is pressed against the outer circumferential surface (3) of the hollow drum by means of force means acting in the plane of the blade.

2. Equipment according to claim 1, characterised in that the stripper blade (13) is guided parallelly to the rotational axis of the hollow drum (2).

3. Equipment according to claim 1 or 2, characterised in that the force means are constructed as a spring element (23).

4. Equipment according to claim 1 or 2, characterised in that the force means are constructed as a hydraulically or pneumatically operated force transmitter.

## Revendications

1. Dispositif pour séparer des substances mélangées les unes aux autres, ayant des fluidités différentes, notamment en vue de la préparation de produits alimentaires, comportant un tambour creux (2) entraîné en rotation et présentant une paroi latérale perforée (3), une bande sans fin de pressage (5) qui peut être pressée contre cette dernière de l'extérieur, en enveloppant une partie de la circonférence du tambour creux (2), ainsi que des moyens (12) de raclage de la matière pressée sur la surface latérale intérieure et la surface latérale extérieure du tambour creux (2), caractérisé en ce qu'au moins le moyen de raclage (12) sur la surface latérale extérieure (3) comporte une lame racleuse (13), qui est soutenue par au moins un élément de support (14) et qui est montée flottante dans une direction essentiellement radiale par rapport au tambour creux, l'élément de support autorisant une liberté de déplacement de la lame racleuse dans le sens de sa longueur, suivant une direction essentiellement axiale par rapport au tambour creux et assurant un soutien ponctuel de la lame racleuse, et la lame racleuse étant repoussée contre la surface latérale extérieure (3) du tambour creux sous l'action de moyens applicateurs de force agissant dans le plan de la lame racleuse.

2. Dispositif selon la revendication 1, caractérisé en ce que la lame racleuse (13) est guidée parallèlement à l'axe de rotation du tambour creux (2).

3. Dispositif selon la revendication 1 ou 2, caractérisé en ce que les moyens applicateurs de force sont conçus sous forme d'un élément-ressort (23).

4. Dispositif selon la revendication 1 ou 2, caractérisé en ce que les moyens applicateurs de force sont conçus sous forme d'un générateur de force à actionnement hydraulique ou pneumatique.
